Europäisches Patentamt

European Patent Office

Office européen des brevets

(19)

(11) **EP 0 658 986 B1**

(12) **FASCICULE DE BREVET EUROPEEN**

(45) Date de publication et mention
de la délivrance du brevet:
**09.02.2000 Bulletin 2000/06**

(51) Int Cl.⁷: **H04B 7/208**

(21) Numéro de dépôt: **94402628.5**

(22) Date de dépôt: **18.11.1994**

(54) **Procédé d'allocation d'un canal de communication dans un réseau par satellite**

Verfahren zur Zuteilung eines Übertragungskanals in einem Satellitennetz

Method of communication channel allocation in a satellite network

(84) Etats contractants désignés:
**DE GB IT**

(30) Priorité: **14.12.1993 FR 9315001**

(43) Date de publication de la demande:
**21.06.1995 Bulletin 1995/25**

(73) Titulaire: **FRANCE TELECOM**
**75015 Paris (FR)**

(72) Inventeurs:
• **Cances, Jean-Pierre**
**F-31000 Toulouse (FR)**
• **Maral, Gérard**
**F-31120 Goyrans (FR)**
• **Coulomb, Bernard**
**F-31240 L'Union (FR)**
• **Lenormand, Régis**
**F-31700 Blagnac (FR)**

(74) Mandataire: **Cabinet Martinet & Lapoux**
**BP 405**
**78055 Saint Quentin en Yvelines Cédex (FR)**

(56) Documents cités:
**WO-A-88/01457          GB-A- 2 184 921**
**US-A- 5 268 694**

**Description**

La présente invention concerne de manière générale des télécommunications entre des stations émettrices-réceptrices terriennes par l'intermédiaire d'un satellite.

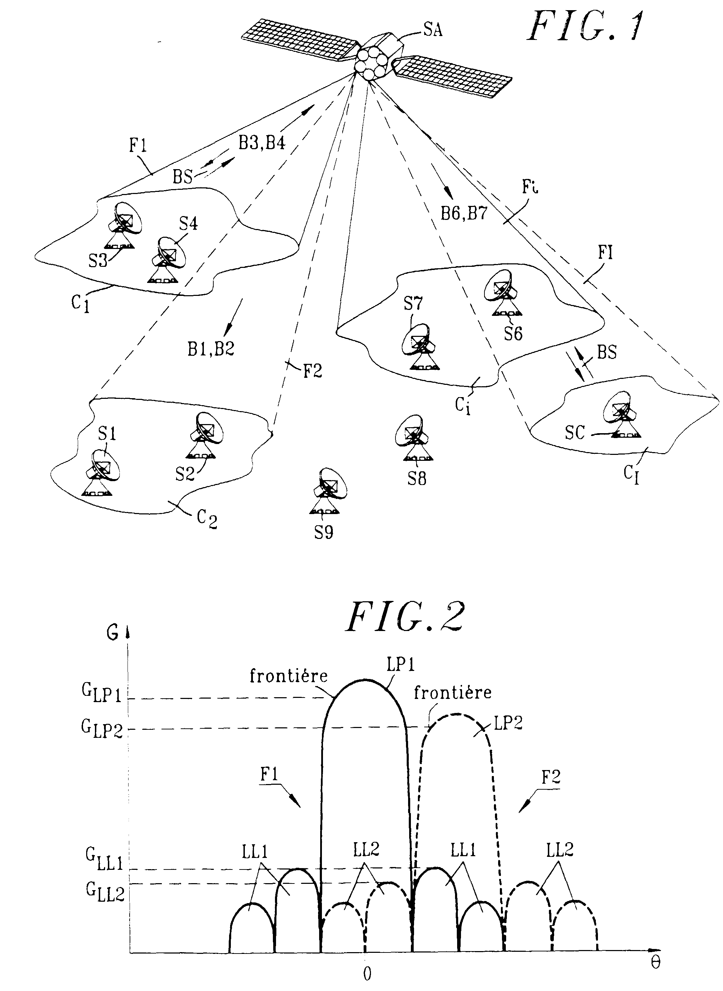

Plus précisément, l'invention à trait à un procédé d'allocation de canaux de communication à des stations appelante et appelée dans un réseau de télécommunications par satellite à réutilisation de fréquence, en réponse à une demande d'établissement de communication transmise par la station appelante vers une station de contrôle SC. Typiquement, comme montré sur la figure 1, un réseau de télécommunications par satellite est défini par une pluralité N=9 de stations émettrices-réceptrices terriennes S1 à S9, la station de contrôle SC et un satellite SA. L'établissement d'une communication entre une station appelante, telle que la station S3, et une station appelée, telle que la station S6, de la pluralité de stations consiste à allouer un canal, ou bande de fréquence, B3 à la station appelante S3, et un canal B6 à la station appelée S6, chacun des canaux B3 et B6 appartenant à un faisceau donné. Les données à transmettre produites par la station S3 sont transmises dans le canal B3 de liaison montante vers le satellite SA, et retransmises du satellite SA vers la station appelée S6 dans le canal B6 de liaison descendante.

Une phase d'établissement de communication débute sur l'initiative de la station appelante S3 qui produit un message de demande d'établissement de communication destiné à la station de contrôle SC. Ce message de demande d'établissement de communication est émis dans un canal de signalisation BS de liaison montante de la station appelante vers le satellite et réémis dans un canal de signalisation BS de liaison descendante du satellite vers la station de contrôle SC. La station de contrôle SC réémet vers la station appelante S3 un message d'établissement de communication dès lors que deux canaux, ici les canaux B3 et B6, peuvent être alloués respectivement aux stations S3 et S6.

La technique antérieure prévoit deux procédés pour gérer des couvertures de faisceau radioélectrique dans un réseau par satellite dans le cadre d'une puissance limitée du satellite SA.

Selon un premier procédé, parmi des canaux de fréquence dans le réseau en nombre prédéterminé, des canaux en nombre variable sont alloués à chaque faisceau en fonction du trafic. Pour cela, il est opérée une réallocation dynamique des canaux de la charge utile du satellite SA entre les faisceaux radioélectriques en fonction de la demande de trafic dans ces faisceaux. Selon un tel procédé, les faisceaux sont figés, ce qui signifie qu'une couverture de chacun des faisceaux pour chacun des canaux le constituant a une étendue constante définie par gain d'antenne au moins égal à un gain minimal. Par contre, pour un faisceau donné, le nombre de canaux varie au cours du temps. La diminution d'une unité du nombre de canaux dans un faisceau entraîne l'augmentation d'une unité du nombre de canaux dans un autre faisceau. Un satellite mettant en oeuvre un tel procédé est dit à matrice de réallocation de capacité.

Un second procédé est décrit dans la demande de brevet européen EP-A-0 587 249 déposée le 07 septembre 1993, laquelle demande est considérée comme contenue dans la présente description et comprise dans l'état de la technique visé à l'article 54, paragraphe 3, de la CBE. Un réseau par satellite est géré par reconfiguration de couverture. Dans ce second procédé, contrairement au premier procédé précité, le nombre de canaux dans chaque faisceau radioélectrique est fixe et la couverture de chaque faisceau est modifiée au cours du temps par diminution ou augmentation de la surface de la couverture en fonction des demandes d'établissement de communication produites dans le réseau. En pratique, bien que le nombre de canaux dans chaque faisceau soit constant, des échanges de canaux entre faisceaux sont prévus. Un canal d'un premier faisceau attribué à un second faisceau entraîne l'attribution au premier faisceau d'un canal du second faisceau. Ainsi, la "largeur de bande" de l'ensemble des canaux d'un faisceau reste constante. La dimension des couvertures de faisceau est reconfigurée de la manière suivante.

Pour l'établissement d'une communication, c'est-à-dire d'une liaison, entre l'une appelante des stations du réseau et l'autre appelée de ces stations à travers le satellite SA, la station appelante transmet préalablement un message de demande d'établissement de communication vers la station de contrôle SC, via un canal de signalisation BS du satellite SA. Dans la station de contrôle est simulée l'évolution de la configuration du réseau relativement aux stations appelante et appelée. Un message d'autorisation d'établissement de communication est transmis par la station de contrôle SC vers la station appelante lorsque des autorisations simulées ont été produites par la station de contrôle SC à la fois pour les stations appelante et appelée. Chacune de ces autorisations simulées correspond en fait à l'allocation possible d'un canal libre pour la station appelante, respectivement appelée.

Deux cas principaux sont prévus pour chaque station, en simulation dans la station de contrôle. Chacun de ces deux cas est directement lié à la puissance limitée du satellite SA.

Dans le premier cas (figure 5 de la demande de brevet européen EP-A-0 587 249) relatif au défaut d'appartenance de la station, appelante ou appelée, à une couverture de faisceau radioélectrique, d'abord la couverture la plus proche de la station est sélectionnée. Puis les couvertures de faisceau autres que la couverture sélectionnée sont réduites en dimension afin de libérer une fraction de la puissance fournie par le satellite SA dans ces autres faisceaux. Cette fraction de puissance libérée est alors utilisée pour augmenter l'étendue de la couverture sélectionnée afin d'inclure dans celle-ci la station. Une autorisation simulée est produite dans la station de contrôle dès lors que, d'une part, la station peut être incluse dans la couverture sélectionnée par augmentation de son étendue, et d'autre part, qu'un canal est libre dans la couverture de faisceau sélectionnée.

Dans le second cas (figure 11 de la demande de brevet européen EP-A-0 587 249), où la station, appelante ou appelée, est incluse dans une couverture de faisceau radioélectrique, deux sous-cas sont distingués. Ou bien le faisceau de cette couverture possède un canal libre, auquel cas ce canal libre est attribué à la station ; ou bien aucun canal n'est libre dans le faisceau associé à la couverture incluant la station, et dans ce sous-cas est recherchée une couverture la plus adjacente à cette couverture ayant un canal libre. Un échange de charge est ensuite opéré entre la couverture la plus adjacente ayant un canal libre et la couverture incluant la station. Cet échange de charge consiste à augmenter l'étendue de la couverture la plus adjacente afin d'y inclure la station, et diminuer en conséquence l'étendue de la couverture incluant la station. Une autorisation simulée est produite pour la station dès lors qu'elle peut être incluse dans la couverture adjacente et qu'un canal est libre dans cette couverture adjacente.

Dès lors que des autorisations simulées ont été produites dans la station de contrôle SC à la fois pour les stations appelante et appelée, la station de contrôle émet vers le satellite SA des valeurs de commande de déphasage et puissance afin de modifier les géométries des couvertures concernées, c'est-à-dire, en outre, celles incluant les stations appelante et appelée conformément à la simulation réalisée. Un message d'autorisation d'établissement est également émis via le satellite SA vers la station appelante afin que débute une phase de communication entre stations appelante et appelée.

Selon une variante du premier cas, relatif au défaut d'appartenance de la station à une couverture, il est prévu de sélectionner, outre la couverture la plus proche, la couverture de plus faible superficie dans le réseau, et pour chacune respective de ces deux couvertures de réduire les étendues des autres couvertures afin d'inclure dans la couverture sélectionnée, la plus proche ou de plus faible superficie, la station. Dans cette variante, deux gains respectifs sont calculés par simulation dans la station de contrôle SC pour la station respectivement selon qu'elle est incluse dans la couverture la plus proche ou la couverture de plus faible superficie. Comme couverture devant inclure la station S est choisie la couverture qui offre finalement le gain le plus élevé. Les valeurs de commande de déphasage et de puissance des éléments rayonnants de l'antenne du satellite sont transmises en conséquence par la station de contrôle SC vers le satellite SA.

Les premier et second procédés connus décrits ci-dessus font abstraction de la réutilisation de fréquence dans le réseau et donc, du problème posé par la gestion des canaux correspondant à une même bande de fréquence dans des faisceaux différents. Il peut en effet s'avérer intéressant pour des raisons relatives à la limitation de la largeur de la bande de fréquence disponible au sein du satellite, de réutiliser des mêmes canaux, ou bandes de fréquence, dans différents faisceaux.

Il apparaît néanmoins que cette réutilisation d'une même bande de fréquence dans différents faisceaux induit une interférence fonction de la séparation angulaire entre ces différents faisceaux.

L'invention vise à fournir un procédé pour gérer l'allocation d'un canal à une station tout en garantissant que des canaux de différents faisceaux radioélectriques correspondant à une même bande de fréquence offrent au plus une interférence maximale déterminée.

Selon une première variante, l'invention concerne un réseau par satellite à reconfiguration de couverture.

A cette fin, un procédé d'allocation d'un canal libre de faisceau radioélectrique par une station de contrôle à chacune des stations appelante et appelée d'un réseau de télécommunications par satellite à reconfiguration de couverture, dans lequel est prévue la réutilisation de mêmes canaux dans différents faisceaux, en réponse à la réception par ladite station de contrôle d'un message de demande d'établissement de communication transmis par la station appelante à travers un canal de signalisation dudit satellite,

comprend en simulation dans la station de contrôle, l'une des première et seconde alternatives séparément pour chacune des stations appelante et appelée, puis une étape finale,

(a) - la première alternative selon laquelle au moins un canal libre appartient à un faisceau formant une couverture incluant ladite chacune des stations comprenant une allocation à ladite chacune des stations dudit au moins un canal libre, et

- l'étape finale comprenant la transmission par la station de contrôle d'un message d'autorisation d'établissement de communication vers ladite station appelante dès qu'un canal libre de faisceau est alloué en simulation à chacune desdites stations appelante et appelée,

et est caractérisé en ce que

(b) - la seconde alternative, selon laquelle aucun canal libre n'appartient audit faisceau formant la couverture incluant ladite chacune des stations, comprend les étapes itératives de :

(b1) - recherche de canaux libres dans chacun des faisceaux adjacents, du plus adjacent au moins adjacent, au faisceau formant la couverture incluant ladite chacune des stations, jusqu'à repérer des canaux libres dans un faisceau adjacent, et

(b2) - en réponse à ces canaux libres repérés dans ledit faisceau adjacent, allocation simulée de l'un desdits canaux libres repérés dans ledit faisceau adjacent à ladite chacune des stations par

échange de charge entre ladite couverture incluant ladite chacune des stations et une couverture adjacente associée audit faisceau adjacent, par réduction de la couverture incluant ladite chacune des stations et augmentation de ladite couverture adjacente, afin que ladite chacune des stations soit localisée dans la couverture adjacente, et détermination de sous-ensembles optimaux de faisceaux comprenant chacun des faisceaux pouvant réutiliser un même canal, et sélection dudit un desdits canaux libres repérés dans ledit faisceau adjacent comme étant celui qui est le moins utilisé dans l'un des sous-ensembles optimaux de faisceaux incluant ledit faisceau adjacent.

De préférence, l'étape de détermination de sous-ensembles optimaux de faisceaux comprend les étapes itératives de :

- constitution de $C_I^T = \frac{I!}{T!(I-T)!}$ sous-ensembles distincts de T faisceaux parmi I faisceaux radioélectriques du réseau, T étant initialisé à 2 et étant incrémenté d'une unité à chaque étape itérative jusqu'au plus I, et
- pour chacun des $C_I^T$ sous-ensembles de T faisceaux constitués, calcul de T niveaux d'isolation, chacun desdits T niveaux d'isolation étant égal au rapport d'un gain d'antenne d'un lobe principal de l'un respectif desdits faisceaux dudit chacun des $C_I^T$ sous-ensembles de T faisceaux sur la somme des gains d'antenne maximaux respectifs de lobes secondaires des autres faisceaux dudit chacun des $C_I^T$ sous-ensembles de T faisceaux, tant qu'une relation conditionnelle établissant que T niveaux d'isolation calculés pour au moins l'un des $C_I^T$ sous-ensembles de T faisceaux constitués sont supérieurs à un seuil est vérifiée,

lesdits sous-ensembles optimaux de faisceaux étant constitués de sous-ensembles de faisceaux parmi

$$C_I^{T_L-1} = \frac{I!}{(T_L-1)!(I-T_L+1)!}$$

sous-ensembles de faisceaux pour chacun desquels $[T_L - 1]$ niveaux d'isolation calculés sont supérieurs audit seuil, $T_L$ désignant une valeur de nombre entier prise par T pour laquelle ladite relation conditionnelle n'est pas vérifiée.

Avantageusement, le procédé comprend en simulation dans la station de contrôle, une troisième alternative selon laquelle ladite chacune des stations n'est localisée dans une aucune couverture de faisceau. La troisième alternative comprend les étapes de :

- détermination parmi les couvertures de faisceau existantes dans le réseau, d'une couverture la plus proche de ladite chacune des stations, et d'une couverture de plus faible superficie ;
- itérativement, pour chacune déterminée desdites couvertures la plus proche et de plus faible superficie, réduction en dimension des couvertures autres que ladite chacune déterminée des couvertures tout en maintenant dans celles-ci des stations qui sont actives précédemment à ladite réception du message de demande d'établissement, jusqu'à ce que ladite chacune déterminée des couvertures puisse être augmentée pour inclure ladite chacune des stations avec un gain d'antenne respectif dans ladite chacune déterminée des couvertures, et
- sélection de l'une desdites couvertures la plus proche et de plus faible superficie en une couverture sélectionnée en fonction du plus élevé des deux gains d'antenne calculés respectivement pour lesdites couvertures la plus proche et de plus faible superficie, pour y inclure ladite chacune des stations dans ladite couverture sélectionnée.

La sélection précédente est ensuite suivie de l'une des première et seconde alternatives et de l'étape finale.

En outre, de manière à répartir uniformément les canaux occupés dans les faisceaux du réseau, le procédé comprend, en réponse à un nombre de canaux occupés dans l'un des faisceaux du réseau supérieur à la partie entière d'un rapport d'un nombre de canaux occupés dans le réseau sur le nombre total de faisceaux radioélectriques dans le réseau, l'exécution de ladite seconde alternative pour chacune des stations couvertes par ledit un des faisceaux, tant que le nombre de canaux occupés dans ledit un des faisceaux est supérieur à ladite partie entière, afin qu'à ladite chacune des stations appartenant à une couverture dudit un des faisceaux soit assigné un canal d'un faisceau adjacent audit un des faisceaux pour libérer un canal dans ledit un des faisceaux.

Selon une seconde variante, l'invention concerne un réseau par satellite à réallocation de capacité.

A cette fin, un procédé d'allocation d'un canal libre de faisceau radioélectrique par une station de contrôle à chacune de stations appelante et appelée d'un réseau de télécommunications par satellite dans lequel est prévue la réutilisation de mêmes canaux dans différents faisceaux, en réponse à la réception par ladite station de contrôle d'un message de demande d'établissement de communication transmis par ladite station appelante à travers un canal de signalisation dudit satellite,

comprend en simulation dans la station de contrôle, l'une de première et seconde alternatives séparément pour chacune desdites stations appelante et appelée, puis une étape finale,

(a) - ladite première alternative selon laquelle au moins un canal libre appartient à un faisceau formant une couverture incluant ladite chacune des stations (S), comprenant une allocation à ladite chacune des stations dudit au moins un canal libre, et

- ladite étape finale comprenant la transmission par la station de contrôle d'un message d'autorisation d'établissement de communication vers ladite station appelante dès qu'un canal libre de faisceau est alloué en simulation à chacune desdites stations appelante et appelée ;

et est caractérisé en ce que

(b) - ladite seconde alternative selon laquelle aucun canal libre n'appartient audit faisceau formant la couverture incluant ladite chacune des stations, comprend les étapes itératives de :

(b1) - recherche de canaux libres dans chacun de faisceaux adjacents du plus adjacent au moins adjacent, audit faisceau formant la couverture incluant ladite chacune des stations, jusqu'à repérer des canaux libres dans un faisceau adjacent, et

(b2) - allocation à ladite chacune des stations de l'un des canaux libres repérés dans ledit faisceau adjacent, dès que dans un sous-ensemble optimal de faisceaux constitué de tous les faisceaux utilisant un même canal que ledit un des canaux libres, chacun de niveaux d'isolation, égal au rapport d'un gain d'antenne d'un lobe principal de l'un respectif de tous les faisceaux du sous-ensemble optimal sur la somme de gains maximaux de lobes secondaires des autres faisceaux dans ledit sous-ensemble optimal est supérieur à un seuil donné.

D'autres caractéristiques et avantages de la présente invention apparaîtront plus clairement à la lecture de la description suivante de plusieurs réalisations en référence aux dessins annexés correspondants dans lesquels :

- la figure 1, déjà commentée, montre une installation de réseau par satellite incluant un satellite et une pluralité de stations terriennes ;
- la figure 2 montre deux diagrammes de rayonnement d'antenne pour illustrer le phénomène d'interférence entre canaux de deux faisceaux ;
- la figure 3 est un algorithme général pour la détermination de sous-ensembles de faisceaux optimaux à interférence tolérable ;
- la figure 4 est un algorithme d'allocation d'un canal dans un réseau par satellite à réutilisation de fréquence utilisant une réallocation de capacité entre faisceaux ; et
- la figure 5 est un algorithme d'allocation d'un canal dans un réseau par satellite à reconfiguration de couverture avec réutilisation de fréquence.

Dans la **figure 2** sont représentés deux diagrammes de rayonnement d'antenne, respectivement en trait continu et discontinu, sous la forme d'un gain G en fonction d'un angle θ. Ces deux diagrammes de rayonnement sont respectivement associés à deux faisceaux radioélectriques F1 et F2 dans le réseau par satellite montré à la figure 1 et visent à montrer la cause des interférences entre canaux correspondant à une même bande de fréquence dans des faisceaux différents. Chacun des deux diagrammes de rayonnement comprend un lobe principal respectif LP1, LP2 et des lobes secondaires respectifs LL1, LL2 latéraux au lobe principal. Lorsque deux faisceaux, ici notés F1 et F2, qui utilisent deux canaux respectifs correspondant à une même bande de fréquence, ne sont pas suffisamment isolés spatialement, une interférence de canal se produit entre des lobes secondaires LL1, LL2, de l'un des faisceaux avec le lobe principal LP2, LP1 de l'autre faisceau, pour le canal considéré. Ainsi, les données convoyées dans le canal de l'un des faisceaux sont perturbées par les données transmises dans le canal de l'autre faisceau. Il est supposé en pratique que les faisceaux sont suffisamment isolés spatialement deux à deux pour que seuls soient pris en compte les lobes secondaires d'un faisceau pour calculer la perturbation induite sur le lobe principal d'un autre faisceau.

Naturellement, de telles interférences concernent aussi bien les canaux de liaison montante pour la transmission de données des stations terriennes vers le satellite SA, que des canaux de liaison descendante pour la transmission de données du satellite SA vers les stations terriennes. Lorsque deux faisceaux F1 et F2 sont associés à deux canaux respectifs correspondant à une même bande de fréquence, des données de liaison montante reçues par le satellite dans l'un des deux canaux peuvent être perturbées par des données reçues dans l'autre canal de faisceau, en dépendance des positions géographiques des deux stations émettant dans les deux canaux respectifs des deux faisceaux F1 et F2. Lorsque deux faisceaux sont associés à deux canaux respectifs correspondant à une même bande de fréquence, les données de liaison descendante dans l'un des deux canaux en provenance du satellite SA reçues par une station couverte par l'un des faisceaux sont perturbées par des données transmises dans l'autre de ces deux canaux par le satellite à destination d'une station couverte par l'autre des faisceaux, en dépendance des localisations géographiques des deux stations.

En pratique, comme montré dans la figure 2, sont définis deux niveaux d'isolation pour deux faisceaux associés à deux canaux respectifs correspondant à une même bande de fréquence. Pour le calcul de chacun de ces deux niveaux d'isolation, représentatifs respectivement de la qualité minimale de la liaison dans les deux canaux, indépendamment de la localisation des stations, chacun des deux canaux associés aux deux faisceaux F1 et F2 est alternativement considéré comme un canal perturbé et comme un canal perturbateur. Dans la figure 2, un premier niveau d'isolation relatif à l'isolation du canal de faisceau F2 par rapport au canal de faisceau F1 est égal au rapport d'un gain d'antenne, dit gain minimal $G_{LP2}$, du lobe principal LP2 pris à la frontière de la couverture du faisceau F2, sur un gain d'antenne maximal $G_{LL1}$ des lobes secondaires LL1 du faisceau F1. Un second niveau d'isolation relatif à l'isolation du canal de faisceau F1 par rapport au canal de faisceau F2 est égal au rapport d'un gain d'antenne, dit gain minimal $G_{LP1}$, du lobe principal LP1 pris à la frontière de la couverture du faisceau F1, sur un gain d'antenne maximal $G_{LL2}$ des lobes secondaires LL2 du faisceau F2. Plus généralement, dans le cas où N faisceaux sont associés à N canaux respectifs correspondant à une même bande de fréquence, N niveaux d'isolation sont déterminés en calculant, tour à tour, la perturbation induite sur l'un des N canaux d'un des faisceaux par les (N-1) autres canaux des autres faisceaux. Chacun des N niveaux d'isolation est égal au rapport du gain d'antenne minimal du lobe principal de l'un des faisceaux pris à la frontière du faisceau concerné sur la somme des gains d'antenne maximaux des lobes secondaires des autres faisceaux.

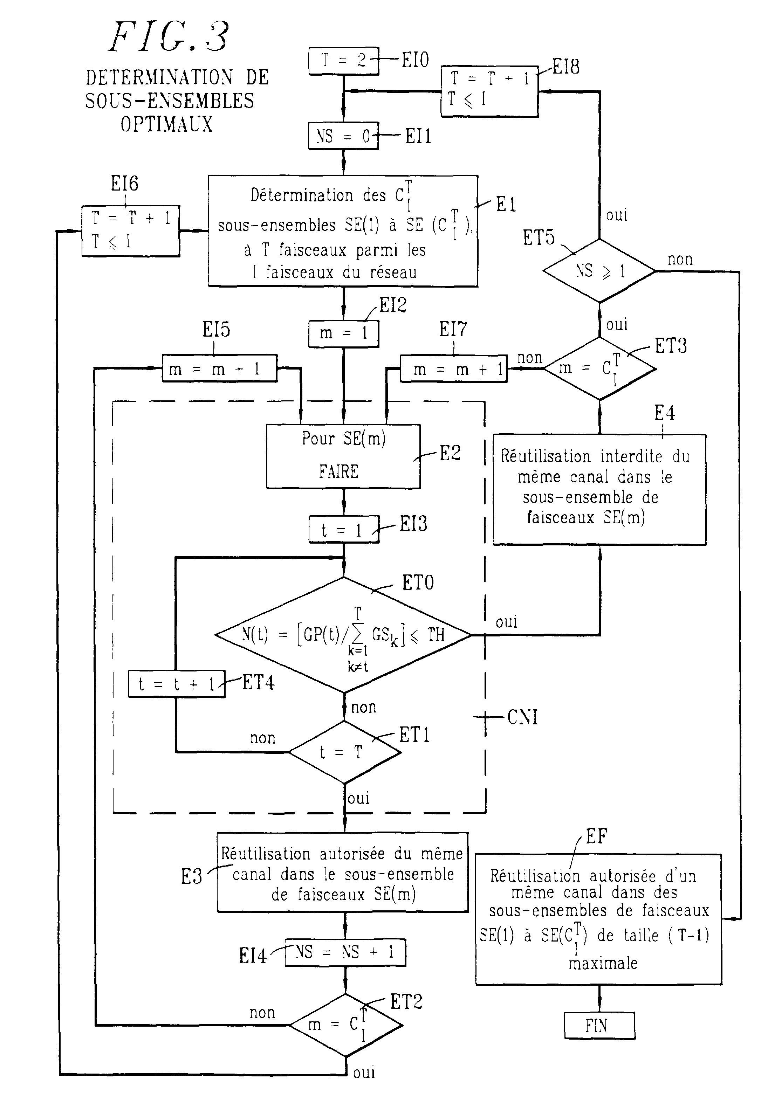

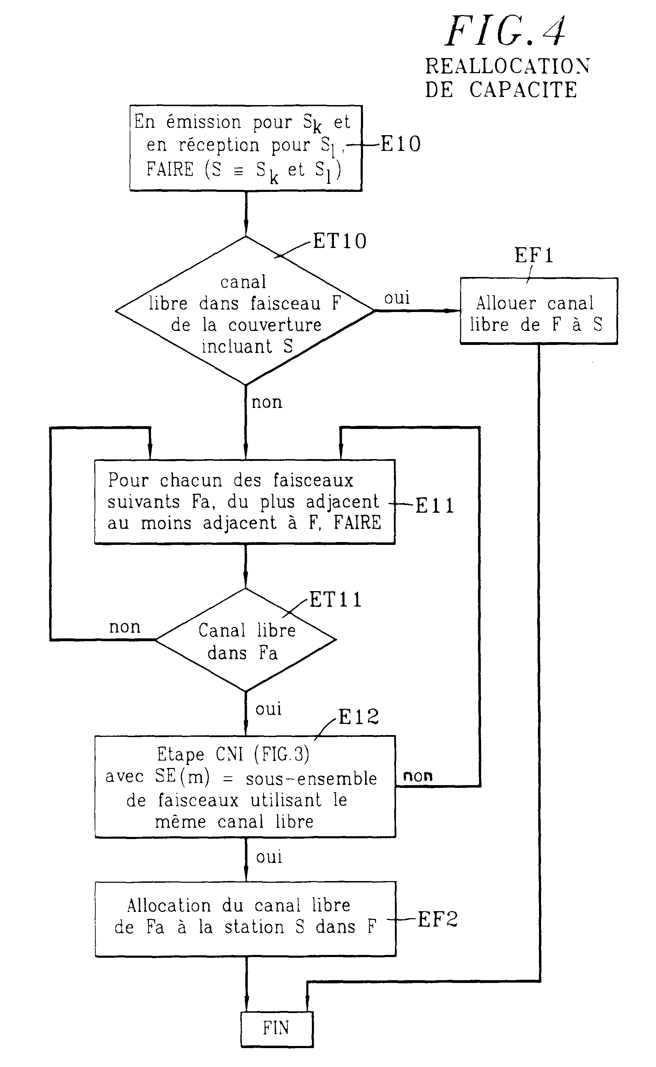

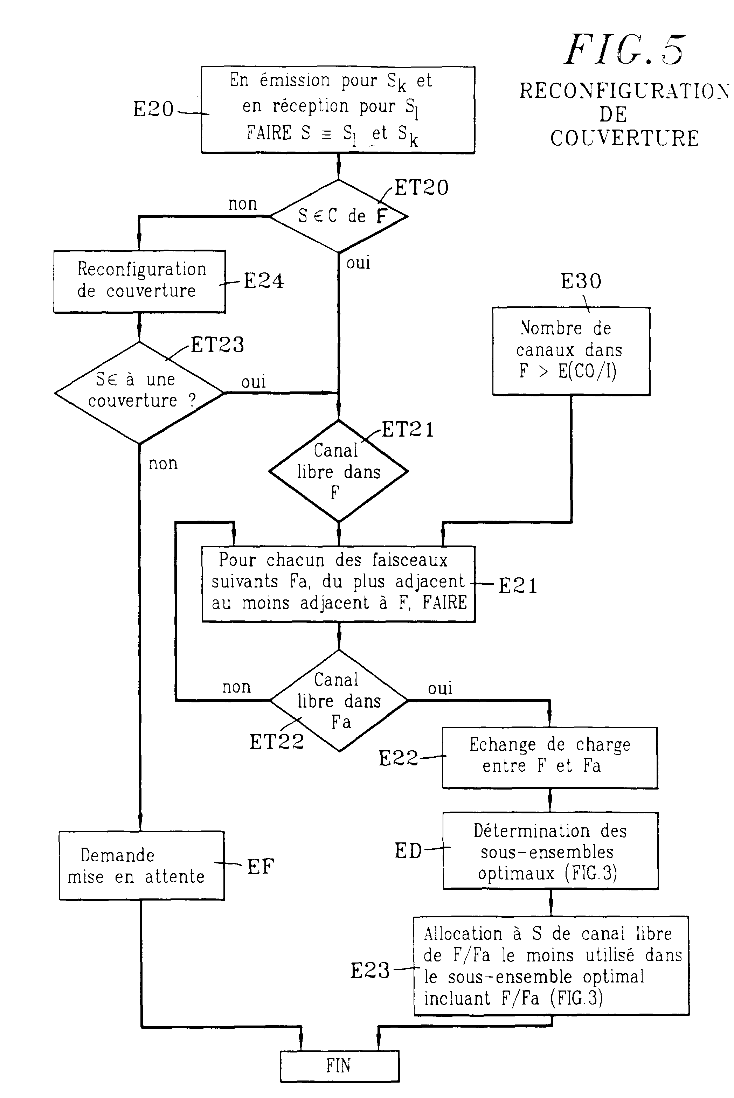

**L'algorithme général de détermination de sous-ensembles optimaux de faisceaux**, résultant de ce qui précède, est maintenant décrit en référence à la **figure 3**. Deux variantes d'implantation de cet algorithme ou d'étapes de cet algorithme pour la mise en oeuvre de l'invention seront décrites ultérieurement en référence aux figures 4 et 5, respectivement pour un réseau par satellite à couvertures fixes avec réallocation de capacité et pour un réseau par satellite à reconfiguration de couverture. L'objectif d'un tel algorithme, mis en oeuvre en simulation dans la station de contrôle SC, est la détermination de sous-ensembles optimaux de faisceaux, c'est-à-dire la détermination de groupes de faisceaux pouvant chacun réutiliser des canaux correspondant à une même bande de fréquence sans engendrer des interférences entre faisceaux et comprenant chacun un nombre maximal de faisceaux. L'algorithme détermine par récurrence de tels sous-ensembles optimaux.

Il est à noter, dans la description qui suit, que le calcul de niveaux d'isolation entre faisceaux présente un caractère "symétrique" pour des liaisons montantes et descendantes. Cela signifie que deux niveaux d'isolation d'un canal de faisceau perturbé par rapport à une pluralité de canaux de faisceau perturbateurs, respectivement en liaison montante et liaison descendante, sont égaux. Ce caractère "symétrique" simplifie les calculs à effectuer dans la station de contrôle.

En pratique un calcul précis d'un niveau d'isolation d'un faisceau par rapport à un autre, relativement à deux stations réutilisant deux canaux correspondant à une même bande de fréquence nécessiterait de connaître la localisation géographique de ces deux stations respectivement dans les couvertures des deux faisceaux pour en déduire des gains d'antenne. Dans un souci de simplification, un niveau d'isolation minimal est calculé en fonction du gain G de lobe principal pour un premier faisceau, à la frontière de ce faisceau, et d'un gain maximal G de lobe secondaire d'un second faisceau ou de la somme de plusieurs gains maximaux G de lobe secondaire pour plusieurs seconds faisceaux.

Comme montré dans l'étape d'initialisation EI0 et l'étape principale E1 à la figure 3, l'algorithme débute par la détermination de tous les sous-ensembles de taille T=2, c'est-à-dire à deux faisceaux, pouvant être formés à partir de I faisceaux radioélectriques existants dans le réseau par satellite. La logique combinatoire enseigne que $C_I^{T=2}$ sous-ensembles à deux faisceaux sont déterminés avec

$$C_I^{T=2} = \frac{I!}{T!(I - T)!}.$$

M sous-ensembles ainsi déterminés sont désignés dans l'algorithme par SE(1) à SE(M=$C_I^{T=2}$).

Pour chacun de ces sous-ensembles SE(m), avec m compris entre 1 et M=$C_I^{T=2}$, tel que répérés par une étape EI2 d'initialisation à 1 de l'indice m et une étape EI5 d'incrémentation de 1 de cet indice m, est effectué un calcul CNI de T niveaux d'isolation. Pour chacun SE(m) des sous-ensembles à T=2 faisceaux, chacun des T=2 niveaux d'isolation N(1) et N(2) est comparé à un seuil TH (étape ET0). Chacun des niveaux d'isolation N(t), avec $1 \leq t \leq T=2$, est égal au rapport du gain du lobe principal GP(t) de l'un respectif des faisceaux du sous-ensemble SE(m) pris à la frontière de la couverture de ce faisceau sur la somme des gains maximaux respectifs des lobes secondaires

$$\left( \sum_{k=1}^{T} GS_k \right)$$

des k autres faisceaux, avec $k \neq t$ et k < T. Pour T = 2, la somme précitée ne comprend qu'une valeur de gain.

Comme montré par les étapes cycliques de test ET0 et ET1 et d'incrémentation ET4, si les T niveaux d'isolation N(t) avec $1 \leq t \leq T$, calculés pour le sous-ensemble SE(m) sont supérieurs au seuil TH, alors T=2 canaux respectifs correspondant à une même bande de fréquence sont réutilisables dans les 2 faisceaux constituant le sous-ensemble SE(m) (étape E3). Par contre, si au moins un niveau d'isolation N(t) est inférieur au seuil TH, alors il est interdit de réutiliser des canaux correspondant à la même bande de fréquence respectivement dans les faisceaux du sous-ensemble concerné SE(m) (étape E4). Comme représenté par les étapes ET2 et EI5 en sortie de l'étape E3, et par les étapes ET3 et EI7 en sortie de l'étape E4, pour chacun des $C_I^{T=2}$ sous-ensembles à T = 2 faisceaux du réseau est opéré un calcul CNI de T niveaux d'isolation. Les caractéristiques des sous-ensembles pouvant réutiliser des canaux correspondant à une même bande de fréquence sont mémorisés.

Une autre variable notée NS est initialisée à zéro en début d'algorithme, à l'étape EI1, et indique le nombre de sous-ensembles de taille T = 2 pouvant utiliser un même canal. Cette variable est incrémentée d'une unité en sortie de l'étape E3, dans l'étape EI4.

Après que tous les sous-ensembles de taille T = 2 soient traités pour déterminer ceux de ces sous-ensembles contenant des faisceaux autorisés à réutiliser des canaux respectifs correspondant à une même bande de fréquence, l'une de deux alternatives est à sélectionner. Ou bien (étape ET5 : oui), au moins un sous-ensemble et au plus M sous-ensembles contenant T = 2 faisceaux pouvant utiliser deux canaux respectifs correspondant à une même bande de fréquence ont été déterminés, et les étapes précédentes pour des sous-ensembles de taille T = T + 1 = 3 (étape EI8 = étape EI6) sont réitérées en vue de déterminer ceux de ces sous-ensembles de taille 3 contenant des faisceaux pouvant réutiliser des canaux respectifs correspondant à une même bande de fréquence, et ceci par récurrence pour des sous-ensembles de taille T = T+1, avec T≤I. Ou bien (étape ET5 : non) aucun sous-ensemble de taille T contenant des faisceaux pouvant réutiliser une même bande de fréquence n'est déterminé et, dans cette alternative (étape EF) les conditions de réutilisation de canal sont limitées aux sous-ensembles de taille t= (T-1) pouvant réutiliser un même canal. Ainsi sont déterminés des sous-ensembles dits optimaux en ce qu'ils constituent des groupes de (T-1) faisceaux de taille maximale pouvant réutiliser des canaux respectifs correspondant à une même bande de fréquence. En pratique, les intersections entre sous-ensembles ne sont pas nécessairement vides, et des mêmes canaux respectifs pouvant être utilisés dans les sous-ensembles de taille (T-1) sont donc distincts.

L'algorithme de la figure 3 est un algorithme général relatif à la mise en oeuvre de l'invention. Son application sera partielle ou totale respectivement selon que l'on considère un réseau par satellite à réallocation de capacité ou un réseau à reconfiguration de couverture.

L'algorithme de la **figure 4** concerne un **réseau par satellite à réallocation de capacité**. Dans un tel réseau, les faisceaux sont figés et les couvertures des faisceaux sont donc de taille constante. La gestion du réseau consiste en la réallocation dynamique des canaux entre faisceaux, ces derniers contenant chacun un nombre variable de canaux en fonction du trafic dans la couverture de faisceau considéré. L'algorithme de la figure 4 est mis en oeuvre dans la station de contrôle SC en réponse à la réception d'un message de demande d'établissement de communication en provenance d'une station appelante, dénotée $S_k$, souhaitant établir une communication avec une station appelée, dénotée

$S_l$. Afin que la communication puisse être établie entre la station $S_k$ et la station $S_l$, un canal doit être alloué à chacune des stations dans le faisceau définissant la couverture à laquelle la station appartient. Ainsi, comme indiqué à l'étape E1O, l'algorithme de la figure 4 concerne aussi bien la station appelante $S_k$ que la station appelée $S_l$, toutes deux dénotées S dans le reste de l'algorithme.

Une première étape de test ET1O recherche au moins un canal libre dans le faisceau F définissant la couverture à laquelle appartient la station S. S'il existe un canal libre, alors ce canal libre est alloué à la station S (étape EF1). Dans le cas contraire, il est vérifié dans des faisceaux successifs Fa définissant des couvertures respectives, de la plus adjacente à la moins adjacente à la couverture du faisceau F à laquelle appartient la station S, s'il existe au moins un canal libre (étapes E11 et ET11). Tant que dans chacun de ces faisceaux successifs Fa du plus adjacent au moins adjacent au faisceau F définissant la couverture à laquelle appartient la station S, aucun canal libre n'est repéré, l'algorithme est récurrent sur un faisceau suivant.

Dès qu'au moins un canal libre est repéré dans l'un de ces faisceaux, l'étape de calcul de niveaux d'isolation CNI décrite précédemment en référence à la figure 3 est mise en oeuvre selon l'invention. Cette étape, dénotée E12 dans la figure 4, est appliquée à un sous-ensemble noté SE(m) regroupant les faisceaux utilisant un canal correspondant à la même bande de fréquence que le canal libre repéré dans l'un des faisceaux adjacents Fa au faisceau F définissant la couverture à laquelle appartient la station S. Pour le sous-ensemble SE(m) ainsi formé, contenant par exemple T faisceaux, sont calculés T niveaux d'isolation N(t), avec $1 \leq t \leq T$. Comme montré dans le bloc CNI à la figure 3, chacun de ces T niveaux d'isolation N(t) est égal au rapport du gain d'antenne du lobe principal de l'un respectif des faisceaux du sous-ensemble pris à la frontière de la couverture de ce faisceau sur la somme des gains d'antenne maximaux respectifs des lobes secondaires des autres faisceaux dans le sous-ensemble SE(m). Si chacun de ces T niveaux d'isolation N(t) est supérieur au seuil TH, alors le canal libre repéré dans ledit un des faisceaux adjacents est alloué au faisceau définissant la couverture à laquelle appartient la station S (étape EF2).

Dans le cas où au moins l'un de ces T niveaux d'isolation est inférieur au seuil TH, la recherche d'un canal libre dans les faisceaux adjacents suivants est réitérée. Dès qu'un canal libre est trouvé, l'étape E12 de calcul de niveaux d'isolation est mise en oeuvre, et ainsi de suite de manière récurrente, comme montré par la liaison reliant l'étape E12 à l'étape E11 dans la figure 4, tant que les niveaux d'isolation calculés pour le sous-ensemble contenant les faisceaux utilisant une même bande de fréquence que le canal libre repéré ne sont pas tous supérieurs audit seuil TH.

Dans la variante précédente de l'invention relative à un réseau par satellite à réallocation de capacité, il est supposé que les couvertures des faisceaux sont figées. Dans un **réseau à reconfiguration de couverture,** le nombre de canaux dans chaque faisceau est constant mais la géométrie des couvertures est variable. La mise en oeuvre d'un procédé d'allocation d'un canal pour la variante de l'invention relative à de tels réseaux par satellite à reconfiguration de couverture est maintenant décrite en référence à la **figure 5**.

Comme précédemment, pour la variante de l'invention relative à un réseau par satellite à réallocation de capacité, l'algorithme de la figure 5 concerne tant la station appelante $S_k$ que la station appelée $S_l$ dans le réseau et est mis en oeuvre dans la station de contrôle SC. La station appelante $S_k$ et la station appelée $S_l$ sont toutes deux dénommées S dans la suite de l'algorithme à partir de l'étape E20. L'étape ET20 détermine si la station S appartient ou n'appartient pas à une couverture C d'un faisceau F.

Si la station S appartient à une couverture de faisceau C, une étape ET21 détermine alors si le faisceau associé à cette couverture comprend au moins un canal libre. S'il existe un canal libre, alors ce canal libre est alloué à la station S. Cependant lorsque plusieurs canaux libres sont repérés dans le faisceau dont la couverture inclut la station S, alors à la station S est alloué celui des canaux libres repérés qui est le moins utilisé dans le sous-ensemble optimal incluant le faisceau ayant la couverture incluant la station S (étape E23). Il est rappelé que les sous-ensembles optimaux sont obtenus par l'algorithme de la figure 3.

Si la couverture incluant la station S ne comprend aucun canal libre, alors les couvertures de faisceau suivantes, de la plus adjacente à la moins adjacente à la couverture C incluant la station S, sont examinées pour déterminer celle de ces couvertures qui est produite par un faisceau comprenant un canal libre (étapes E21 et ET22). Dès que l'une de ces couvertures adjacentes à la couverture C incluant la station S est repérée, un échange de charge (étape E22) est effectué entre le faisceau F associé à la couverture incluant la station S et le faisceau Fa comprenant un canal libre. Cet échange consiste, tel que cela est décrit en référence à la figure 11 de la demande de brevet européen précitée EP-A-0 587 249, à réduire la taille la couverture de faisceau F incluant la station S et augmenter en conséquence la taille de la couverture associée au faisceau Fa comprenant un canal libre afin que cette dernière couverture puisse inclure la station S. Comme précédemment, si un seul canal libre est repéré dans la couverture adjacente, alors ce canal libre est alloué à la station S. Si plusieurs canaux sont repérés dans le faisceau adjacent, alors est alloué à la station S, celui de ces canaux libres qui est le moins utilisé dans le sous-ensemble optimal incluant le faisceau adjacent (étape E23).

Par définition, les sous-ensembles optimaux dépendent de la géométrie des couvertures de faisceau, et donc de la configuration des faisceaux. Or l'échange de charge, décrit en référence à l'étape E22, modifie la géométrie des couvertures. En conséquence, entre l'échange de charge (étape E22) et l'allocation à la station S du canal libre le moins utilisé dans le faisceau adjacent, est prévue une étape de détermination de sous-ensembles optimaux ED reprenant l'algorithme montré à la figure 3. L'étape ED redéfinit les sous-ensembles optimaux en dépendance des modifications relatives aux couvertures respectives incluant la station S et associées à un faisceau adjacent ayant un canal libre, suite à l'échange de charge E22.

En revenant à l'autre alternative de l'étape ET20, si la station S n'est localisée dans aucune couverture de faisceau, l'invention propose une étape de reconfiguration de couverture, comme montré dans l'étape E24. Cette reconfiguration consiste, tel que décrit en référence à la figure 5 de la demande de brevet européen précitée EP-A-0 587 249, à sélectionner, d'une part, la couverture la plus proche de la station S et, d'autre part, la couverture de plus faible superficie au sol. Pour chacune de ces deux couvertures est opérée, en simulation dans la station de contrôle SC, une réduction de la surface des couvertures autres que ladite chacune de ces deux couvertures afin de libérer en simulation une fraction de la puissance du satellite SA, et ainsi augmenter la taille de ladite chacune de ces deux couvertures afin d'y inclure la station S. Puis (étape ET23) celle de ces deux couvertures qui peut inclure la station S avec le plus élevé gain d'antenne est sélectionnée. Pour cette couverture incluant maintenant la station S sont alors appliquées les étapes ET21, E21, ET22, E22, ED et E23 décrites précédemment.

Dans le cas où ni la couverture la plus proche, ni la couverture de plus faible superficie ne peut inclure la station S, alors la demande d'établissement de communication émanant de la station appelante est mise en attente (étape EF).

Comme indiqué à une étape E30, il est également prévu de répartir des canaux occupés dans les faisceaux afin que chaque faisceau contienne un nombre identique de canaux occupés. Cette répartition facilite la gestion du réseau en diminuant le nombre de faisceaux dans lesquels tous les canaux sont occupés. A cette fin, lorsqu'un nombre de canaux occupés dans un faisceau donné est supérieur à une sensible moyenne de canaux occupés par faisceaux telle que :

E (CO/I),

où E désigne la fonction partie entière, CO le nombre de canaux occupés dans le réseau et I le nombre de faisceaux radioélectriques dans le réseau, les étapes E21, ET22, E22, ED et E23 sont appliqués audit faisceau donné, afin que certaines stations dans le faisceau donné se voient assigner un canal d'un faisceau adjacent audit faisceau donné pour libérer un canal dans le faisceau donné.

## Revendications

**1.** Procédé d'allocation d'un canal libre de faisceau radioélectrique (F, Fa) par une station de contrôle (SC) à chacune de stations appelante ($S_k$) et appelée ($S_l$) d'un réseau de télécommunications par satellite (SA), dans lequel est prévue la réutilisation de mêmes canaux dans différents faisceaux, en réponse à la réception par ladite station de contrôle (SC) d'un message de demande d'établissement de communication transmis par ladite station appelante ($S_k$) à travers un canal de signalisation dudit satellite,

ledit procédé comprenant en simulation dans la station de contrôle (SC), l'une de première et seconde alternatives (ET21) séparément pour chacune (S) des stations appelante ($S_k$) et appelée ($S_l$), puis une étape finale,

(a) - ladite première alternative selon laquelle au moins un canal libre appartient à un faisceau (F) formant une couverture (C) incluant ladite chacune des stations (S), comprenant une allocation à ladite chacune des stations dudit au moins un canal libre, et

- ladite étape finale comprenant la transmission par la station de contrôle (SC) d'un message d'autorisation d'établissement de communication vers ladite station appelante dès qu'un canal libre de faisceau est alloué en simulation à chacune desdites stations appelante et appelée ($S_k$, $S_l$),

caractérisé en ce que

(b) - ladite seconde alternative selon laquelle aucun canal libre n'appartient audit faisceau (F) formant la couverture (C) incluant ladite chacune des stations (S), comprend les étapes itératives de :

(b1) - recherche (E21, ET22) de canaux libres dans chacun de faisceaux adjacents (Fa), du plus adjacent au moins adjacent, audit faisceau (F) formant la couverture (C) incluant ladite chacune des stations (S), jusqu'à repérer des canaux libres dans un faisceau adjacent, et

(b2) - en réponse auxdits canaux libres repérés dans ledit faisceau adjacent (Fa), allocation simulée de l'un desdits canaux libres repérés dans ledit faisceau adjacent à ladite chacune des stations (S) par

échange de charge (E22) entre ladite couverture (C) incluant ladite chacune des stations (S) et une couverture adjacente associée audit faisceau adjacent par réduction de la couverture incluant ladite chacune des stations (S) et augmentation de ladite couverture adjacente, afin que ladite chacune des stations soit localisée dans la couverture adjacente, et

détermination (ED) de sous-ensembles optimaux de faisceaux comprenant chacun des faisceaux pouvant réutiliser un même canal, et sélection (E23) dudit un desdits canaux libres repérés dans ledit faisceau adjacent (Fa) comme étant celui qui est le moins utilisé dans l'un des sous-ensembles optimaux de faisceaux incluant ledit faisceau adjacent.

**2.** Procédé conforme à la revendication 1, caractérisé en ce que l'étape de détermination de sous-ensembles optimaux de faisceaux (ED) comprend les étapes itératives de :

- constitution (E1) de

$$C_I^T = \frac{I!}{T!(I-T)!}$$

sous-ensembles distincts de T faisceaux parmi I faisceaux radioélectriques du réseau, T étant initialisé à 2 et étant incrémenté d'une unité à chaque étape itérative jusqu'au plus I, et

- pour chacun des $C_I^T$ sous-ensembles de T faisceaux constitués, calcul (CNI) de T niveaux d'isolation (N(t)), chacun desdits T niveaux d'isolation étant égal au rapport d'un gain d'antenne (GP) d'un lobe principal (LP1 ; LP2) de l'un respectif desdits faisceaux dudit chacun des $C_I^T$ sous-ensembles de T faisceaux sur la somme des gains d'antenne maximaux respectifs des lobes secondaires (LL1, LL2) des autres faisceaux dudit chacun des $C_I^T$ sous-ensembles de T faisceau, tant qu'une relation conditionnelle (ETC) établissant que T niveaux d'isolation (N(t)) calculés pour au moins l'un des $C_I^T$ sous-ensembles de T faisceaux constitués sont supérieurs à un seuil (TH) est vérifiée,

lesdits sous-ensembles optimaux de faisceaux étant constitués de sous-ensembles de faisceaux parmi $C_I^{T_L-1} = (I!)/[(T_L - 1)!(I - T_L + 1)!]$ sous-ensembles de faisceaux pour chacun desquels $[T_L - 1]$ niveaux d'isolation (N(t)) calculés sont supérieurs audit seuil, $T_L$ désignant une valeur de nombre entier prise par T pour laquelle ladite relation conditionnelle n'est pas vérifiée (EF).

**3.** Procédé conforme à la revendication 1 ou 2, caractérisé en ce qu'il comprend,

en simulation dans la station de contrôle (SC), une troisième alternative (ET20) selon laquelle ladite chacune des stations (S) n'est localisée dans aucune couverture de faisceau (F), comprenant les étapes (E24) de :

- détermination parmi les couvertures de faisceau existantes dans le réseau, d'une couverture la plus proche de ladite chacune des stations, et d'une couverture de plus faible superficie ;

- itérativement, pour chacune déterminée desdites couvertures la plus proche et de plus faible superficie, réduction en dimension des couvertures autres que ladite chacune déterminée des couvertures tout en maintenant dans celles-ci des stations qui sont actives précédemment à ladite réception du message de demande d'établissement, jusqu'à ce que ladite chacune déterminée des couvertures puisse être augmentée pour inclure ladite chacune des stations (S) avec un gain d'antenne respectif dans ladite chacune déterminée des couvertures, et

- sélection de l'une desdites couvertures la plus proche et de plus faible superficie en une couverture sélectionnée en fonction du plus élevé de deux gains d'antenne calculés respectivement pour lesdites couvertures la plus proche et de plus faible superficie, pour inclure ladite chacune des stations (S) dans ladite couverture sélectionnée,

ladite sélection étant suivie de l'une desdites première et seconde alternatives (ET21) et de l'étape finale.

4. Procédé conforme à l'une quelconque des revendications 1 à 3, caractérisé en ce qu'il comprend, en réponse (E30) à un nombre de canaux occupés dans l'un (F) des faisceaux du réseau supérieur à la partie entière d'un rapport d'un nombre (CO) de canaux occupés dans le réseau sur le nombre (I) de faisceaux radioélectriques dans le réseau, l'exécution de ladite seconde alternative (E21 à E23) pour chacune des stations couvertes par ledit un des faisceaux, tant que le nombre de canaux occupés dans ledit un des faisceaux est supérieur à ladite partie entière, afin qu'à ladite chacune des stations appartenant à une couverture dudit un des faisceaux soit assigné un canal d'un faisceau adjacent audit un des faisceaux pour libérer un canal dans ledit un des faisceaux.

5. Procédé d'allocation d'un canal libre de faisceau radioélectrique (F, Fa) par une station de contrôle (SC) à chacune de stations appelante ($S_k$) et appelée ($S_l$) d'un réseau de télécommunications par satellite (SA), dans lequel est prévue la réutilisation de mêmes canaux dans différents faisceaux, en réponse à la réception par ladite station de contrôle (SC) d'un message de demande d'établissement de communication transmis par ladite station appelante ($S_k$) à travers un canal de signalisation dudit satellite,

ledit procédé comprenant en simulation dans la station de contrôle (SC), l'une de première et seconde alternatives séparément pour chacune (S) des stations appelante ($S_k$) et appelée ($S_l$), puis une étape finale,

(a) - ladite première alternative selon laquelle au moins un canal libre appartient à un faisceau (F) formant une couverture (C) incluant ladite chacune des stations (S), comprenant une allocation à ladite chacune des stations dudit au moins un canal libre, et
- ladite étape finale comprenant la transmission par la station de contrôle (SC) d'un message d'autorisation d'établissement de communication vers ladite station appelante dès qu'un canal libre de faisceau est alloué en simulation à chacune desdites stations appelante et appelée ($S_k$, $S_l$),

caractérisé en ce que

(b) - ladite seconde alternative selon laquelle aucun canal libre n'appartient audit faisceau (F) formant la couverture (C) incluant ladite chacune des stations (S), comprend les étapes itératives de :

(b1) - recherche (E11, ET11) de canaux libres dans chacun des faisceaux adjacents (Fa) du plus adjacent au moins adjacent, audit faisceau (F) formant la couverture (C) incluant ladite chacune des stations (S), jusqu'à repérer des canaux libres dans un faisceau adjacent, et

(b2) - allocation (EF2) à ladite chacune des stations (S) de l'un des canaux libres repérés dans ledit faisceau adjacent (Fa), dès que dans un sous-ensemble optimal de faisceaux constitué de tous les faisceaux utilisant un même canal que ledit un des canaux libres, chacun des niveaux d'isolation (N(t)), égal au rapport d'un gain d'antenne (GP) d'un lobe principal (LP1, LP2) de l'un respectif de tous les faisceaux du sous-ensemble optimal sur la somme de gains maximaux des lobes secondaires (LL1, LL2) des autres faisceaux dans ledit sous-ensemble optimal est supérieur à un seuil donné (TH).

## Patentansprüche

1. Verfahren zur Zuweisung eines freien Kanals radioelektrischer Strahlen (F, Fa) durch eine Steuerstation (SC) zu jeder anrufenden ($S_k$) und angerufenen ($S_1$) von Stationen eines Satellitentelekommunikationsnetzes (SA), in dem die Wiederverwendung derselben Kanäle in unterschiedlichen Strahlen vorgesehen ist, in Reaktion auf den Empfang einer Anforderungsmeldung für die Herstellung einer Nachrichtenverbindung durch die Steuerstation (SC), welche Meldung durch die anrufende Station ($S_k$) über einen Signalisierungskanal des Satelliten übertragen worden ist,

wobei das Verfahren als Simulation in der Steuerstation (SC) eine von einer ersten und zweiten Alternative (ET21) getrennt für jede (S) der anrufenden ($S_k$) und angerufenen ($S_1$) Stationen, dann einen Endschritt umfaßt, wobei

(a) - die erste Alternative, gemäß der wenigstens ein freier Kanal zu einem Strahl (F) gehört, ein Bestrahlungsfeld (C) bildet, einschließend die besagte jede der Stationen (S), umfassend eine Zuweisung des wenigstens einen freien Kanals zu der besagten jedem der Stationen und

- der Endschritt die Übertragung einer Meldung der Erlaubnis zum Herstellen einer Nachrichtenverbindung zur anrufenden Station umfaßt, sobald ein freier Kanal von Strahlen als Simulation zu jeder der anrufenden und angerufenen Stationen ($S_k$, $S_1$) zugewiesen worden ist,

dadurch **gekennzeichnet,** daß

(b) - die zweite Alternative, nach der kein freier Kanal zu den das Bestrahlungsfeld (C), das jede besagte der Stationen (S) einschließt, bildenden Strahlen (F) gehört, die IterationsSchritte umfaßt:

(b1) - Suchen (E21, ET22) von freien Kanälen in jedem von dem Strahl (F), der das Bestrahlungsfeld (C), das die besagte jede der Stationen (S) einschließt, von dem mehr benachbarten bis zum weniger benachbarten, benachbarten Strahlen (Fa), bis zur Feststellung der freien Kanäle in einem benachbarten Strahl und

(b2) - in Reaktion auf die in dem benachbarten Strahl (Fa) festgestellten freien Kanäle simulierte Zuweisung des einen der festgestellten freien Kanäle in dem benachbarten Strahl zu der besagten jeden der Stationen (S) durch

Ladungsaustausch (E22) zwischen dem Bestrahlungsfeld (C), das die besagte der Stationen (S) einschließt, und einem dem benachbarten Strahl zugeordneten benachbarten Strahlungsfeld durch Verkleinerung des Bestrahlungsfelds, das die besagte der Stationen (S) einschließt, und Vergrößerung des benachbarten Strahlungsfelds, damit die besagte der Stationen im benachbarten Bestrahlungsfeld lokalisiert wird, und Bestimmung (ED) von optimalen Strahlen-Untergruppen, umfassend jeweils Strahlen, die denselben Kanal wiederverwenden können, und Auswahl (E 23) des besagten einen der im benachbarten Strahl (Fa) festgestellten freien Kanäle als denjenigen, der in der einen der optimalen Strahlen-Untergruppen am wenigsten verwendet wird, die den benachbarten Strahl einschließen.

**2.** Verfahren nach Anspruch 1, dadurch **gekenn-**

**zeichnet**, daß der Schritt der Bestimmung von optimalen Strahlen-Untergruppen (ED) die Iterationsschritte umfaßt:

- Bildung (E1) von

$$C_I^T = \frac{I!}{T! \, (I - T)!}$$

verschiedenen Untergruppen von T Strahlen unter I radioelektrischen Strahlen des Netzes, wobei T mit 2 initialisiert wird und bei jedem Iterationsschritt um eine Einheit bis höchstens I erhöht wird, und

- für jede der $C_I^T$ Untergruppen der gebildeten T Strahlen Berechnung (CNI) von T Isolationspegeln (N(t)), wobei jeder der T Isolationspegel gleich dem Antennenverstärkungsverhältnis (GP) einer Hauptkeule (LP1; LP2) eines entsprechenden der Strahlen der besagten der $C_I^T$ Untergruppen der T Strahlen zur Summe der maximalen entsprechenden Antennenverstärkungen der Sekundärkeulen (LL1, LL2) der anderen Strahlen der besagten jeden der $C_I^T$ Untergruppen der T Strahlen ist, wenn schon eine Bedingungsrelation (ETO) verifiziert ist, die vorsieht, daß für wenigstens eine der gebildeten $C_I^T$ Untergrüppen der T Strahlen berechnete T Isolationspegel (N(t)) größer als ein Schwellwert (TH) sind,

wobei die optimalen Strahlen-Untergruppen aus Strahlen-Untergruppen unter

$$C_I^{T_L - 1} = (I!) \, / \, [(T_L - 1)! \, (I - T_L + 1)!]$$

Strahlen-Untergruppen bestehen, für die jeweils berechnete ($T_L$ - 1) Isolationspegel (N(t)) größer als der Schwellwert sind, wobei $T_L$ einen ganzzahligen Wert bezeichnet, der von T genommen wird, für den die besagte Bedingungsrelation nicht verifiziert ist (EF).

**3.** Verfahren nach Anspruch 1 oder 2, dadurch **gekennzeichnet,** daß es umfaßt

als Simulation in der Steuerstation (SC) eine dritte Alternative (ET20), gemäß der die besagte jeweilige der Stationen (S) in keinem Bestrahlungsfeld (F) lokalisiert wird, umfassend die Schritte (E24):

- Bestimmung unter den im Netz vorhandenen Bestrahlungsfeldern eines jeder der Stationen am nächsten liegenden Bestrahlungsfeldes und eines Bestrahlungsfeldes mit geringster Flächenausdehnung;

- iteratives Verringern der Ausdehnung der Bestrahlungsfelder mit Ausnahme des als am nächsten liegenden und die geringste Flächenausdehnung aufweisenden bestimmten Bestrahlungsfeldes, für jedes bestimmte, am nächsten liegende und die geringste Ausdehung aufweisende Bestrahlungsfeld, während in diesen Stationen beibehalten werden, die vor dem Empfang der Hertellungsanforderungsmeldung aktiv sind, bis jedes bestimmte der Bestrahlungsfelder verstärkt werden kann, damit es jede der Stationen (S) mit einer entsprechenden Antennenverstärkung in jedem bestimmten der Bestrahlungsfelder einschließt, und,

- Auswahl des am nächsten liegenden und die geringste Flächenausdehnung aufweisenden Bestrahlungsfeldes zu einem ausgewählten Bestrahlungsfeld abhängig von der höheren der beiden jeweils für die am nächsten liegenden, die geringste Flächenausdehnung aufweisenden Bestrahlungsfelder berechneten beiden Antennenverstärkungen, um jede der Stationen (S) im ausgewählten Bestrahlungsfeld einzuschließen,

wobei auf die Auswahl die erste oder die zweite Alternative (ET21) und der Endschritt folgen.

4. Verfahren nach einem beliebigen der Ansprüche 1 bis 3, dadurch **gekennzeichnet**, daß es in Reaktion (E30) auf eine Anzahl von belegten Kanälen in einem (F) der Strahlen des Netzes, die größer als der ganze Teil eines Verhältnisses einer Zahl (CO) von belegten Kanälen im Netz zur Zahl (I) radioelektrischer Strahlen im Netz ist, die Ausführung der zweiten Alternative (E21 bis E23) für jede der durch den einen der Strahlen belegten Stationen umfaßt, während die Zahl von belegten Kanälen in dem einen der Strahlen größer als der ganze Teil ist, damit jede der zu einem Bestrahlungsfeld des einen der Strahlen gehörende Station einem Kanal eines dem einen der Strahlen benachbarten Strahls zugeordnet wird, um einen Kanal in dem einen der Strahlen freizugeben.

5. Verfahren zur Zuweisung eines freien Kanals radioelektrischer Strahlen (F, Fa) durch eine Steuerstation (SC) jeweils zu einer anrufenden (S$_k$) und angerufenen S$_1$ Station eines Satellitentelekommunikationsnetzes, bei dem die Wiederverwendung derselben Kanäle in unterschiedlichen Strahlen in Reaktion auf den Empfang durch die Steuerstation (SC) einer Anforderungsmeldung zur Herstellung einer Nachrichtenverbindung vorgesehen ist, die durch die anrufende Station (S$_k$) über einen Signalisierungskanal des Satelliten übertragen worden ist,

wobei das Verfahren als Simulation in der Steuerstation der Station (SC) eine erste und eine zweite Alternative getrennt für jede (S) der anrufenden (S$_k$) und angerufenen (S$_1$) Stationen, dann einen Endschritt umfaßt,

(a) - wobei die erste Alternative, gemäß der wenigstens ein freier Kanal zu einem ein Bestrahlungsfeld (C), das besagte jede der Stationen (S) enthält, eine Zuweisung zur besagten jeden der Stationen des wenigstens einen freien Kanals umfaßt, und

- wobei der Endschritt die Übertragung einer Nachricht mit Erlaubnis der Herstellung einer Nachrichtenverbindung zur anrufenden Station durch die Steuerstation (SC) umfaßt, sobald ein freier Strahlenkanal als Simulation zu jeder der anrufenden und angerufenen (S$_k$, S$_1$) Stationen zugewiesen ist,

dadurch **gekennzeichnet**, daß

(b) - die zweite Alternative, gemäß der kein freier Kanal zu dem das Bestrahlungsfeld (C), das besagte jede der Stationen (S) einschließt, bildenden Strahlen (F) gehört, die Iterationsschritte umfaßt:

(b1) - Suche (E11, ET11) nach freien Kanälen in jedem der benachbarten Strahlen (Fa), von dem am nähesten liegenden bis zu dem am wenigsten naheliegenden, zu dem das Bestrahlungsfeld (C), das besagte jede der Stationen (S) einschließt, bildenden Strahl (F), bis zum Feststellen der freien Kanäle im benachbarten Strahl und

(b2) - Zuweisung (EF2) zu jeder der Stationen (S) eines der festgestellten freien Kanäle in dem benachbarten Strahl (Fa), sobald in einer optimalen Strahlen-Untergruppe, bestehend aus sämtlichen Strahlen, die denselben Kanal wie der eine der freien Kanäle benutzen, jeder der Isolationspegel (N(t)) gleich dem Verhältnis einer Antennenverstärkung (GP) einer Hauptkeule (LP1, LP2) eines entsprechenden sämtlicher Strahlen der optimalen Untergruppe zur Summe maximaler Verstärkungen der Sekundärkeulen (LL1, LL2) der anderen Strahlen in der optimalen Untergruppe größer als ein gegebener Schwellwert (TH) ist.

**Claims**

1. A method of allocating a free radio beam channel (F, Fa) by a control station (SC) to each of calling ($S_k$) and called ($S_1$) stations of a satellite telecommunication network (SA), in which re-using of same channels in different beams is foreseen, in response to reception of a call setting-up request message emitted by said calling station ($S_k$) via a signalling channel of said satellite in said control station (SC),

said method entailing in simulation in the control station (SC) one of first and second alternatives (ET21) separately for each (S) of the calling ($S_k$) and called ($S_1$) stations, and then a final step,

(a) - said first alternative whereby at least one free channel belongs to a beam (F) forming a coverage (C) including said each of the stations (S), comprising allocation of said at least one free channel to said each of the stations ; and
- said final step comprising emission of a call setting-up authorization message from the control station (SC) to said calling station as soon as a beam free channel is allocated in simulation to each of said calling and called stations ($S_k$, $S_1$).

characterized in that

(b) - said second alternative whereby no free channel belongs to said beam (F) forming the coverage (C) including said each of the stations (S), comprises the iterative steps of :

(b1) searching (E21, ET22) for free channels in each of adjacent beams (Fa) from that nearest to that farthest from said beam (F) forming the coverage (C) including said each of the stations (S) until free channels are identified in an adjacent beam, and
(b2) in response to said free channels identified in said adjacent beam (Fa), allocating in a simulated way one of said free channels identified in said adjacent beam to said each of the stations (S) by

transferring load (E22) between said coverage (C) including said each of the stations (S) and an adjacent coverage associated with said adjacent beam by reducing in surface the coverage including said each of the stations (S) and increasing in surface said adjacent coverage so that said each of the stations is located in the adjacent coverage, and
determining (ED) optimal subsets of beams each comprising beams able to re-use the same channel, and selecting (E23) said one of said free channels identified in said adjacent beam (Fa) as that which is least used in one of the optimal subsets of beams including said adjacent beam.

2. The method according to claim 1, characterized in that the step of determining optimal subsets of beams (ED) comprises the iterative steps of :

- constituting (E1)

$$C_I^T = \frac{I!}{T!(I-T)!}$$

separate subsets of T beams from I radio beams of the network, T being an integer initialized to 2 and being incremented by 1 on each iterative step up to at most I, and
- for each of the $C_I^T$ constituted subsets of T beams calculating (CNI) T levels of isolation (N (t)), each of said T levels of isolation being equal to the ratio of an antenna gain (GB) of a main lobe (LP1 ; LP2) of a respective one of said beams in each of said $C_I^T$ constituted subsets of T beams to the sum of the respective maximal antenna gains of secondary lobes (LL1, LL2) of the other beams in each of said $C_I^T$ subsets of T beam, provided that a conditional relationship (ETO) establishing that T levels of isolation (N(t)) calculated for at least one of said $C_I^T$ constituted subsets of T beams are more than a threshold (TH) is satisfied,

said optimal subsets of beams being made up of subsets of beams from $C_I^{T_L-1} = (I!)/[(T_L - 1)!(I - T_L + 1)!]$ subsets of beams for each of which $[T_L - 1]$ levels of isolation (N(t)) calculated are more than said threshold, $T_L$ denoting an integer number value assumed by T for which said conditional relationship is not satisfied (EF).

3. The method according to claim 1 or 2, characterised in that it comprises

in the simulation carried out in the control station (SC), a third alternative (ET20) whereby said each of the stations (S) is not located in any beam coverage (F), comprising the steps (E24) of:

- determining from the beam coverages existing in the network a coverage nearest to said each of the stations and a lowermost surface coverage;
- by iteration, for determined each of said nearest and lowermost surface coverages, reducing in size the coverages other than said determined each of the coverages whilst maintaining in said coverages stations which are active prior to said reception of the call setting-up request message, until said determined each of the coverages can be increased to include said each of the stations (S) with a respective antenna gain in said determined each of the coverages, and

- selecting one of said nearest and lowermost surface coverages into a selected coverage as a function of the higher of two antenna gains respectively calculated for said nearest and lowermost surface coverages to include said each of the stations (S) in said selected coverage,

said step of selecting being followed by one of said first and second alternatives (ET21) and by the final step.

4. The method according to any one of claims 1 to 3, characterised in that it comprises, in response (E30) to a number of busy channels in one (F) of the beams in the network greater than the integer part of a ratio of a number (CO) of busy channels in the network to the number (I) of radio beams in the network, execution of said second alternative (E21 to E23) for each of the stations covered by said one of the beams, when the number of the busy channels in said one of the beams is greater than said integer part, so that to each of said stations belonging to a coverage of said one of the beams is assigned a radio channel of a beam adjacent said one of the beams to free up a radio channel in said one of the beams.

5. A method of allocating a free radio beam channel (F, Fa) by a control station (SC) to each of calling ($S_k$) and called ($S_1$) stations of a satellite telecommunication network (SA), in which re-using of same channels in different beams is foreseen, in response to reception of a call setting-up request message emitted by said calling station ($S_k$) via a signalling channel of said satellite in said control station (SC),
said method entailing in simulation in the control station (SC) one of first and second alternatives separately for each (S) of the calling ($S_k$) and called ($S_1$) stations, and then a final step,
(a) - said first alternative whereby at least one free channel belongs to a beam (F) forming a coverage (C) including said each of the stations (S), comprising allocation of said at least one free channel to said each of the stations ; and
- said final step comprising emission of a call setting-up authorization message from the control station (SC) to said calling station as soon as one of a beam free channel is allocated in simulation to each of said calling and called stations ($S_k$, $S_1$).
characterized in that
(b) - said second alternative whereby no free channel belongs to said beam (F) forming the coverage (C) including said each of the stations (S), comprises the iterative steps of :

(b1) searching (E11, ET11) for free channels in each of the adjacent beams (Fa) from that nearest to that farthest from said beam (F) forming the coverage (C) including said each of the stations (S) until free channels are identified in an adjacent beam, and
(b2) allocating (EF2) to said each of the stations (S) of one of the free channels identified in said adjacent beam (Fa) as soon as in an optimal subset of beams constituted by all beams using a same channel as said one of the free channels, each of the isolation levels (N(t)) equal to the ratio of an antenna gain (GP) of a main lobe (LP1, LP2) of one respective of all the beams in the optimal subset to the sum of maximal gains of the secondary lobes (LL1, LL2) of the other beams in said optimal subset is greater than a given threshold (TH).

FIG.1

FIG.2

## FIG.3

DETERMINATION DE
SOUS-ENSEMBLES
OPTIMAUX

$T = 2$ — EI0

$T = T + 1$ — EI8
$T \leqslant I$

$NS = 0$ — EI1

EI6

$T = T + 1$
$T \leqslant I$

Détermination des $C_I^T$
sous-ensembles $SE(1)$ à $SE(C_I^T)$,
à T faisceaux parmi les
I faisceaux du réseau — E1

ET5  oui  $NS \geqslant 1$  non

$m = 1$ — EI2

EI5

$m = m + 1$

EI7

$m = m + 1$  non  $m = C_I^T$ — ET3  oui

Pour $SE(m)$
FAIRE — E2

E4

Réutilisation interdite du
même canal dans le
sous-ensemble de
faisceaux $SE(m)$

$t = 1$ — EI3

ET0

$$N(t) = \left[ GP(t) \Big/ \sum_{\substack{k=1 \\ k \neq t}}^{T} GS_k \right] \leqslant TH$$  oui

$t = t + 1$ — ET4

non

$t = T$ — ET1  non

CNI

oui

E3  Réutilisation autorisée du même
canal dans le sous-ensemble
de faisceaux $SE(m)$

EF

Réutilisation autorisée d'un
même canal dans des
sous-ensembles de faisceaux
$SE(1)$ à $SE(C_I^T)$ de taille $(T-1)$
maximale

EI4 — $NS = NS + 1$

non  $m = C_I^T$ — ET2

FIN

oui

*FIG.4*

REALLOCATION
DE CAPACITE

En émission pour $S_k$ et
en réception pour $S_l$, ——E10
FAIRE $(S \equiv S_k$ et $S_l)$

ET10

canal
libre dans faisceau F ——— oui ———→ EF1
de la couverture
incluant S

Allouer canal
libre de F à S

non

Pour chacun des faisceaux
suivants Fa, du plus adjacent ——E11
au moins adjacent à F, FAIRE

ET11

non ——— Canal libre
dans Fa

oui

E12

Etape CNI (FIG.3)
avec $SE(m)$ = sous-ensemble
de faisceaux utilisant le
même canal libre

non

oui

Allocation du canal libre
de Fa à la station S dans F ——EF2

FIN

*FIG.5*

RECONFIGURATION
DE
COUVERTURE

E20 — En émission pour $S_k$ et en réception pour $S_l$ FAIRE $S \equiv S_l$ et $S_k$

ET20

$S \in C$ de **F**

non

oui

Reconfiguration de couverture — E24

ET23

$S \in$ à une couverture ?

oui

non

E30

Nombre de canaux dans $F > E(CO/I)$

ET21

Canal libre dans F

Pour chacun des faisceaux suivants Fa, du plus adjacent au moins adjacent à F, FAIRE — E21

Canal libre dans Fa

non

oui

ET22

Echange de charge entre F et Fa — E22

Demande mise en attente — EF

Détermination des sous-ensembles optimaux (FIG.3) — ED

Allocation à S de canal libre de F/Fa le moins utilisé dans le sous-ensemble optimal incluant F/Fa (FIG.3) — E23

FIN